# EUROPÄISCHE PATENTSCHRIFT

(11) **EP 3 500 777 B1**
(45) Veröffentlichungstag und Bekanntmachung des Hinweises auf die Patenterteilung: **10.03.2021**
(21) Anmeldenummer: 17751288.6
(22) Anmeldetag: 24.07.2017
(51) Int. Cl.: F16H 57/04, B60K 6/365, B60K 6/40

(54) **GETRIEBE FÜR EIN KRAFTFAHRZEUG**
TRANSMISSION FOR A MOTOR VEHICLE
BOÎTE DE VITESSES POUR VÉHICULE AUTOMOBILE

(30) Priorität: 16.08.2016 DE 102016215184
(43) Veröffentlichungstag der Anmeldung: 26.06.2019
(73) Patentinhaber: ZF Friedrichshafen AG, 88046 Friedrichshafen (DE)
(72) Erfinder: BREHMER, Martin, 88069 Tettnang (DE); HERRMANN, Michael, 88719 Stetten (DE)
(74) Vertreter: ZF Friedrichshafen AG
(86) Internationale Anmeldenummer: PCT/EP2017/068650
(87) Internationale Veröffentlichungsnummer: WO 2018/033346

(56) Entgegenhaltungen:
- EP-A2- 0 284 216
- WO-A1-02/055907
- WO-A2-2005/100777
- DE-A1- 10 101 091
- DE-A1-102008 054 637
- DE-A1-102014 204 088

## Beschreibung

Die Erfindung betrifft ein Getriebe für ein Kraftfahrzeug, mit einem hydraulischen Getriebesteuergerät, einem Getriebegehäuse, einer an das Getriebegehäuse angebrachten Ölwanne und einer Leistungselektronik, die als Umrichter für eine elektrische Maschine dient und die an dem Getriebegehäuse und/oder der Ölwanne abgestützt ist.

Außerdem betrifft die Erfindung einen Hybridantrieb mit einem solchen Getriebe. Darüber hinaus betrifft die Erfindung ein Kraftfahrzeug mit dem Getriebe oder dem Hybridantrieb.

Aus dem Stand der Technik ist eine Vielzahl von Fahrzeugen bekannt, bei denen die Leistungselektronik im Fahrzeug untergebracht ist. Dies ist notwendig, da im Getriebe kein ausreichender Bauraum zur Aufnahme der Leistungselektronik zur Verfügung steht. Somit muss im Fahrzeug Bauraum für die Leistungselektronik vorgehalten werden, was von den Fahrzeugherstellern als nachteilig angesehen wird. Darüber hinaus ist die Leistungselektronik oftmals an Stellen am Fahrzeug angebracht, die von dem Getriebe weit entfernt sind. Daher müssen lange Kabelbäume eingesetzt werden, um die Fahrzeugbatterie mit der Leistungselektronik und um die Leistungselektronik mit einer elektrischen Maschine zu verbinden. Insbesondere führt ein AC-Kabel von der Leistungselektronik zu dem Getriebe.

Die WO 2005/100777 A2 beschreibt ein Verfahren zur Steuerung des Anfahrvorgangs eines Kraftfahrzeugs. Darin ist ein Hybridantriebsystem dargestellt, welches ein automatisiertes Schaltgetriebe aufweist. Eine Elektromaschine ist über ein Zwischengetriebe mittels schaltbaren Kupplungen mit dem automatisierten Schaltgetriebe verbunden. Eine der Elektromaschine zugeordnete Leistungselektronik ist am Zwischengetriebe verschraubt.

Die EP 0 284 216 A2 beschreibt einen Ventil-Aufbau für ein Automatikgetriebe. Der Ventil-Aufbau weist eine Deckelplatte auf, welche an einem Getriebegehäuse befestigt wird, um einen Innenraum des Gehäuses zu verschließen. An der Deckelplatte sind eine elektrische Verdrahtung und ein Stecker angeordnet, um nur eine einzige elektrische Verbindung zu dem Getriebegehäuse zu verwenden.

Die DE 101 01 091 A1 beschreibt ein hydraulisches Kraftfahrzeug-Getriebesteuergerät mit einer Kunststoff-Hydraulikverteilerplatte und darin eingebetteten angeordneten Leitern des Getriebesteuergeräts. In der Verteilerplatte sind Kanäle zur Verteilung von Hydraulikflüssigkeit angeordnet.

Die Aufgabe der Erfindung besteht daher darin, ein Getriebe anzugeben, mittels dem die oben genannten Nachteile vermieden werden können.

Diese Aufgabe wird durch ein Getriebe der eingangs genannten Art gelöst, das dadurch gekennzeichnet ist, dass das Getriebe ein hydraulisches Getriebesteuergerät aufweist, wobei das hydraulische Getriebesteuergerät und die Leistungselektronik bezogen auf eine Getriebemittelachse tangential und/oder axial zumindest abschnittsweise nebeneinander angeordnet sind.

Erfindungsgemäß wurde erkannt, dass der Bauraum neben dem hydraulischen Getriebesteuergerät für die Anordnung der Leistungselektronik genutzt werden kann. Durch das Nebeneinanderanordnen der Leistungselektronik und des hydraulischen Getriebesteuergeräts in tangentialer und/oder axialer Richtung muss kein Bauraum mehr in dem Fahrzeug für die Leistungselektronik vorgesehen werden. Darüber hinaus verringert sich die Länge der benötigten elektrischen Leitung, da der Abstand zwischen der Leistungselektronik und dem Getriebe nicht mehr überbrückt werden muss. Auch besteht ein Vorteil der Erfindung darin, dass kein AC-Kabel mehr eingesetzt werden muss. Das Fahrzeug, insbesondere die Fahrzeugbatterie, und die Leistungselektronik müssen nur noch mit einem DC-Kabel verbunden werden. Darüber hinaus bestehen Kostenvorteile, da weniger Systemschnittstellen vorhanden sind. Die im Folgenden verwendeten Richtungsangaben "axiale Richtung", "radiale Richtung" und "tangentiale Richtung" beziehen sich jeweils auf die Getriebemittelachse. Die Leistungselektronik dient, wie eingangs bereits genannt, als Umrichter für die elektrische Maschine. Insbesondere dient die Leistungselektronik dazu, den von einer Batterie bereitgestellten Gleichstrom in einen Wechselstrom umzuwandeln.

Die elektrische Maschine besteht zumindest aus einem Stator und einem drehbar gelagerten Rotor und ist in einem motorischen Betrieb eingerichtet sein, elektrische Energie in mechanische Energie in Form von Drehzahl und Drehmoment zu wandeln, sowie in einem generatorischen Betrieb mechanische Energie in elektrische Energie in Form von Strom und Spannung zu wandeln. Dabei kann die elektrische Maschine bei einem Hybridantrieb zum Einsatz kommen, bei dem die durch die elektrische Maschine bereitgestellte Leistung auf eine Getriebeausgangswelle übertragen wird. Natürlich kann die elektrische Maschine zu anderen Zwecken eingesetzt werden, wie beispielsweise zum Antreiben einer in dem Getriebe angeordneten Pumpe. Die Leistungselektronik kann mit einer oder mehreren elektrischen Maschinen elektrisch leitend verbunden sein.

Als ein hydraulisches Getriebesteuergerät wird eine Baueinheit verstanden, über die jeweils zwischen der Pumpe des Getriebes und den jeweiligen Verbrauchern des Getriebes, wie beispielsweise Kupplungen, Kühlölleitungen und dergleichen, eine definierte Aufteilung von Drücken und/oder Ölströmen realisierbar ist. Vorzugsweise weist das hydraulische Getriebesteuergerät Direktschaltventile und/oder Schiebedruckregler auf, wodurch eine kleine Ausbildung des hydraulischen Getriebesteuergeräts möglich ist. Infolge der kleinen Ausbildung des hydraulischen Getriebesteuergeräts steht in axialer und/oder tangentialer Richtung des Getriebegehäuses ausreichend Bauraum für die Leistungselektronik zur Verfügung.

Die Leistungselektronik und das hydraulische Getriebesteuergerät sind in tangentialer und/oder axialer Richtung unmittelbar oder mittelbar nebeneinander angeordnet. Dabei sind die Leistungselektronik und das hydraulische Getriebesteuergerät in radialer Richtung von der Getriebemittelachse beabstandet angeordnet. Die Leistungselektronik und das hydraulische Getriebesteuergerät sind unmittelbar nebeneinander angeordnet, wenn keine weiteren Bauteile in tangentialer und/oder axialer Richtung zwischen der Leistungselektronik und dem hydraulischen Getriebesteuergerät angeordnet sind. Die Leistungselektronik und das hydraulische Getriebesteuergerät sind mittelbar nebeneinander angeordnet, wenn in axialer und/oder tangentialer Richtung zwischen der Leistungselektronik und dem hydraulischen Getriebesteuergerät Bauteile, wie beispielsweise eine Ölwannenwand, angeordnet sind.

Die Leistungselektronik kann derart ausgebildet sein, dass ein erster Abschnitt der Leistungselektronik in axialer Richtung neben dem hydraulischen Getriebesteuergerät und ein zweiter Abschnitt der Leistungselektronik in tangentialer Richtung neben dem hydraulischen Getriebesteuergerät angeordnet ist. Dies ist insbesondere dann der Fall, wenn die Leistungselektronik, wie nachstehend noch näher beschrieben wird, eine L-Form aufweist.

Bei einer besonderen Ausführung können das hydraulische Getriebesteuergerät und die Leistungselektronik in einer Ebene angeordnet sein. Die Ebene erstreckt sich in tangentialer und axialer Richtung. Die Getriebemittelachse ist nicht Bestandteil der Ebene und die Ebene ist in radialer Richtung von der Getriebemittelachse beabstandet. Dabei sind die Leistungselektronik und das hydraulische Getriebesteuergerät tangential nebeneinander angeordnet, wenn sich eine zur tangentialen Richtung parallele Gerade sowohl durch die Leistungselektronik als auch durch das hydraulische Getriebesteuergerät erstreckt und/oder wenn die Leistungselektronik in einer anderen Ebene angeordnet sind, die sich in tangentialer Richtung und radialer Richtung erstreckt. Zudem sind die Leistungselektronik und das hydraulische Getriebesteuergerät axial nebeneinander angeordnet, wenn sich eine zur axialen Richtung parallele andere Gerade sowohl durch die Leistungselektronik als auch durch das hydraulische Getriebesteuergerät erstreckt und/oder wenn die Leistungselektronik und das hydraulische Getriebesteuergerät in einer zusätzlichen Ebene angeordnet sind, die sich in axialer Richtung und in radialer Richtung erstreckt.

Darüber hinaus kann die Leistungselektronik zu dem hydraulischen Getriebesteuergerät versetzt angeordnet sein. Dies bedeutet, dass die Leistungselektronik und das hydraulische Getriebesteuergerät nicht in radialer Richtung übereinander bzw. untereinander angeordnet sind.

Das hydraulische Getriebesteuergerät kann in einem Hohlraum der mit dem Getriebegehäuse einstückig verbundenen Ölwanne angeordnet sein. Das Getriebegehäuse kann eine Getriebeeinheit umhüllen, die mehrere Planetenradsätze und/oder mehrere Zahnräder aufweist, mittels denen unterschiedliche Gangstufen realisiert werden können. Die Getriebeeinheit ist in einem Hohlraum des Getriebegehäuses angeordnet. Die Ölwanne kann sich bezogen auf die Getriebemittelachse von dem Getriebegehäuse in radialer Richtung, insbesondere in Richtung zum Fahrbahngrund, erstrecken.

Die Leistungselektronik kann außerhalb des Hohlraums der Ölwanne und/oder au-ßerhalb des Hohlraums des Getriebegehäuses angeordnet sein. So kann die Leistungselektronik an dem Getriebegehäuse, insbesondere einer Außenseite des Getriebegehäuses, und/oder an einer Ölwannenwand, insbesondere einer Außenseite der Ölwannenwand, der Ölwanne anliegen. Insbesondere kann die Leistungselektronik mit dem Getriebegehäuse und/oder mit der Ölwannenwand lösbar befestigt werden. Dabei kann die Leistungselektronik unmittelbar an dem Getriebegehäuse und/oder der Ölwannenwand anliegen, so dass eine kompakte Bauweise des Getriebes realisierbar ist. Insbesondere kann die Leistungselektronik in radialer Richtung unterhalb des Getriebegehäuses angeordnet sein.

Durch die Anordnung und/oder Befestigung der Leistungselektronik an bzw. mit dem Getriebegehäuse und/oder der Ölwanne kann außerdem auf einfache Weise eine Abstützung der Leistungselektronik, insbesondere in der radialen Richtung, an dem Getriebegehäuse und/oder der Ölwanne erreicht werden. Im Ergebnis muss die Leistungselektronik beispielsweise nicht durch andere Fahrzeugbauteile abgestützt werden.

Bei einer besonderen Ausführung sind ein Leistungselektronikboden und eine Ölwannenplatte in der Ebene oder in einer weiteren Ebene, die parallel zu der Ebene ist, angeordnet. Dadurch ist sichergestellt, dass sich die Leistungselektronik und die Ölwanne in radialer Richtung von der Getriebemittelachse gleich weit erstrecken. Dies ist vorteilhaft, weil für die Leistungselektronik in radialer Richtung kein zusätzlicher Bauraum benötigt wird, so dass ein in radialer Richtung kompaktes Getriebe realisiert werden kann. Eine Ölwannenplatte dient zum Abschluss des Hohlraums der Ölwanne und verhindert somit, dass das in dem Getriebe befindliche Öl aus dem Getriebe ausströmt.

Bei einer alternativen Ausführung kann die Leistungselektronik in dem Hohlraum der Ölwanne angeordnet sein. Auch bei dieser Ausführung kann die Leistungselektronik an dem Getriebegehäuse, insbesondere einer Innenseite des Getriebegehäuses, und/oder an einer Ölwannenwand, insbesondere einer Innenseite der Ölwannenwand, der Ölwanne anliegen. Insbesondere kann die Leistungselektronik mit dem Getriebegehäuse und/oder mit der Ölwannenwand lösbar befestigt werden. Alternativ oder zusätzlich kann die Leistungselektronik unmittelbar an dem hydraulischen Getriebesteuergerät anliegen und/oder mit diesem lösbar befestigt sein.

Der Leistungselektronikboden und ein Boden des hydraulischen Getriebesteuergeräts können in der Ebene oder in einer weiteren Ebene angeordnet sein, die parallel zu der Ebene ist. Im Ergebnis ist sichergestellt, dass die Leistungselektronik in radialer Richtung nicht mehr Bauraum benötigt als das hydraulische Getriebesteuergerät, so dass die Ölwanne in radialer Richtung kompakt ausgebildet sein kann.

Bei einer besonderen Ausführung kann die Leistungselektronik eine L-Form und/oder das hydraulische Getriebesteuergerät kann eine L-Form aufweisen. Dabei kann sich ein Steg der Leistungselektronik in axialer Richtung erstrecken und ein Fuß der Leistungselektronik kann sich in tangentialer Richtung erstrecken. Gleichermaßen kann sich ein Steg des hydraulischen Getriebesteuergeräts in axialer Richtung erstrecken und ein Fuß des hydraulischen Steuergeräts kann sich in tangentialer Richtung erstrecken. Durch eine derartige Ausbildung der Leistungselektronik und/oder des hydraulischen Getriebesteuergeräts kann eine, insbesondere in axialer Richtung, kompakte Bauweise realisiert werden.

Eine kompakte Bauweise wird realisiert, wenn die Leistungselektronik und das hydraulische Getriebesteuergerät derart angeordnet sind, dass ein Fuß der Leistungselektronik einen Stegkopf des hydraulischen Getriebesteuergeräts wenigstens teilweise umschließt und/oder dass ein Fuß des hydraulischen Getriebesteuergeräts einen Stegkopf der Leistungselektronik wenigstens teilweise umschließt.

Darüber hinaus ist eine Ausführung vorteilhaft, bei der die Leistungselektronik derart ausgebildet und angeordnet ist, dass sie zur Ölwanne bündig ist. Insbesondere kann die Leistungselektronik derart angeordnet sein, dass eine sich in axialer Richtung erstreckende Seite der Leistungselektronik und eine Ölwannenwand der Ölwanne in tangentialer Richtung nicht versetzt zueinander angeordnet sind.

Von ganz besonderem Vorteil ist ein Hybridantrieb mit einem Getriebe und einer elektrischen Maschine, wobei die elektrische Maschine mit der Leistungselektronik elektrisch leitend verbunden ist. Die elektrische Maschine kann mit einer Getriebewelle, wie beispielsweise einer Getriebeeingangswelle, wirkverbunden sein. Darüber hinaus kann abhängig von einem Betriebszustand des Getriebes, wie beispielsweise einem eingelegten Gang, eine Getriebeausgangswelle von der elektrischen Maschine antreibbar sein. Es können auch Betriebszustände des Getriebes existieren, bei denen die elektrische Maschine nicht aktiviert ist und die Getriebeausgangswelle, insbesondere ausschließlich, durch eine Kraftfahrzeug-Antriebseinheit des Fahrzeugs antreibbar ist.

Die elektrische Maschine kann unmittelbar oder mittelbar, wie beispielsweise mittels eines Übersetzungsgetriebes, mit der Getriebewelle wirkverbunden sein. Die elektrische Maschine kann Bestandteil des Getriebes sein und/oder im Getriebe integriert sein. Alternativ kann die elektrische Maschine als modulare Einheit ausgeführt sein, die mit dem Getriebe verbunden wird und/oder an das Getriebe angebracht wird.

Das Getriebe kann ein automatisiertes Getriebe sein. Darüber hinaus ist ein Kraftfahrzeug mit der Kraftfahrzeug-Antriebseinheit, wie beispielsweise einem Verbrennungsmotor, einem erfindungsgemäßen Getriebe oder einem erfindungsgemäßen Hybridantrieb von Vorteil, wobei die Kraftfahrzeug-Antriebseinheit mit dem Getriebe oder dem Hybridantrieb wirkverbunden oder mittels eines Schaltelements, insbesondere einer Kupplung, wirkverbindbar ist.

In den Figuren ist der Erfindungsgegenstand schematisch dargestellt und wird anhand der Figuren nachfolgend beschrieben, wobei gleiche oder gleichwirkende Elemente zumeist mit denselben Bezugszeichen versehen sind. Dabei zeigt:
- Fig. 1: eine Unteransicht des erfindungsgemäßen Getriebes gemäß einem ersten Ausführungsbeispiel,
- Fig. 2: eine Querschnittsansicht des erfindungsgemäßen Getriebes gemäß dem ersten Ausführungsbeispiel,
- Fig. 3: eine Unteransicht des erfindungsgemäßen Getriebes gemäß dem ersten Ausführungsbeispiel mit einer Ölwannenplatte,
- Fig. 4: eine Querschnittsansicht des erfindungsgemäßen Getriebes gemäß dem ersten Ausführungsbeispiel mit der Ölwannenplatte,
- Fig. 5: eine perspektivische Darstellung des erfindungsgemäßen Getriebes gemäß dem ersten Ausführungsbeispiel ohne Leistungselektronik,
- Fig. 6: eine perspektivische Darstellung des erfindungsgemäßen Getriebes gemäß dem ersten Ausführungsbeispiel mit Ölwannenplatte und ohne Leistungselektronik,
- Fig. 7: eine Unteransicht des erfindungsgemäßen Getriebes gemäß einem zweiten Ausführungsbeispiel,
- Fig. 8: eine Querschnittsansicht des erfindungsgemäßen Getriebes gemäß dem zweiten Ausführungsbeispiel,
- Fig. 9: eine perspektivische Ansicht des erfindungsgemäßen Getriebes gemäß dem zweiten Ausführungsbeispiel,
- Fig. 10: eine Unteransicht des erfindungsgemäßen Getriebes gemäß einem dritten Ausführungsbeispiel ohne Ölwannenplatte,
- Fig. 11: eine Querschnittsansicht des erfindungsgemäßen Getriebes gemäß dem dritten Ausführungsbeispiel,
- Fig. 12: eine Unteransicht des erfindungsgemäßen Getriebes gemäß einem vierten Ausführungsbeispiel ohne Ölwannenplatte,
- Fig. 13: eine Querschnittsansicht des erfindungsgemäßen Getriebes gemäß dem vierten Ausführungsbeispiel,
- Fig. 14: ein Kraftfahrzeug mit dem erfindungsgemäßen Getriebe.

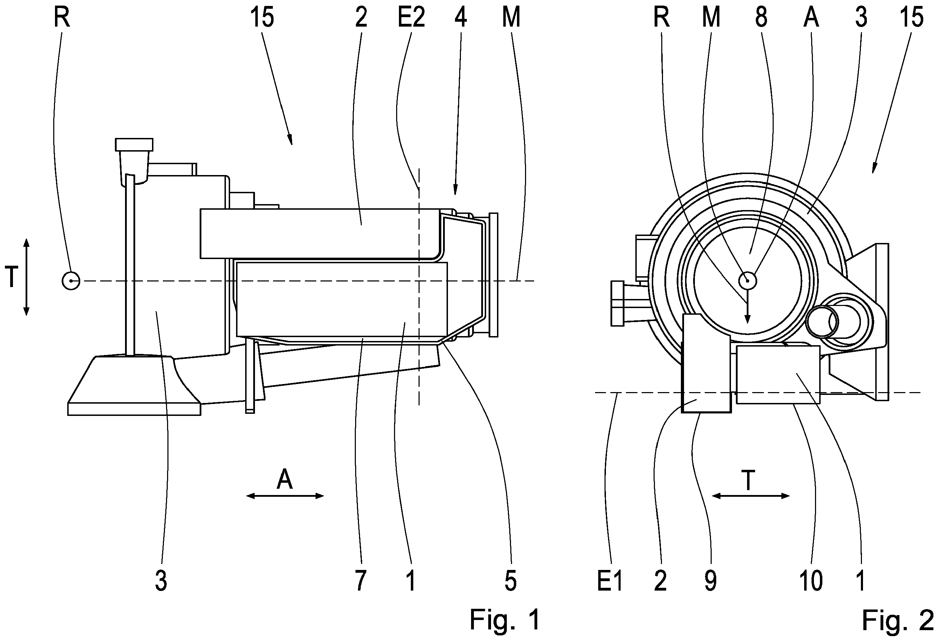

Das in Figur 1 dargestellte Getriebe 15 gemäß einem ersten Ausführungsbeispiel weist ein hydraulisches Getriebesteuergerät 1 und eine Leistungselektronik 2 auf. Das hydraulische Getriebesteuergerät 1 und die Leistungselektronik 2 sind bezogen auf eine Getriebemittelachse M tangential nebeneinander angeordnet. Darüber hinaus sind das hydraulische Getriebesteuergerät 1 und die Leistungselektronik 2, wie aus Figur 2 ersichtlich, in einer Ebene E1 angeordnet, die sich in tangentialer Richtung T und in axialer Richtung A erstreckt. Dabei liegen das hydraulische Getriebesteuergerät 1 und die Leistungselektronik 2 in einer tangentialen Richtung T mittelbar nebeneinander.

Aufgrund der Nebeneinanderanordnung des hydraulischen Getriebesteuergeräts 1 und der Leistungselektronik 2 in tangentialer Richtung T sind das hydraulische Getriebesteuergerät 1 und die Leistungselektronik 2 in einer anderen Ebene E2 angeordnet, die sich in tangentialer Richtung T und in radialer Richtung R erstreckt. Die andere Ebene E2 steht zur Ebene E1 senkrecht.

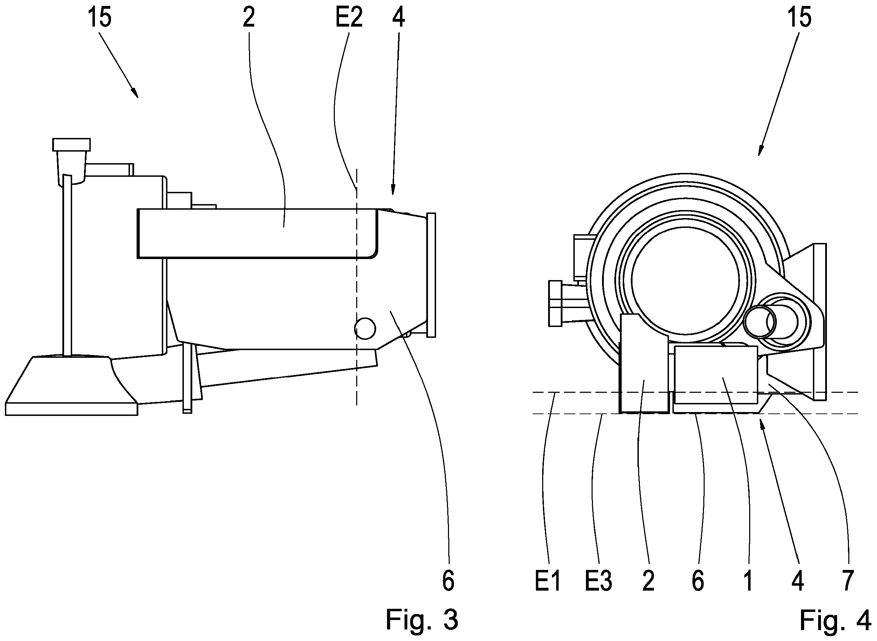

Das Getriebe 15 weist ein Getriebegehäuse 3 und eine Ölwanne 4 auf. Die Ölwanne 4 wird durch eine Ölwannenwand 5 begrenzt und weist eine in Figur 3 dargestellte Ölwannenplatte 6 auf. Das hydraulische Getriebesteuergerät 1 ist in einem Hohlraum 7 der Ölwanne 4 angeordnet. Dagegen ist die Leistungselektronik 2 außerhalb der Ölwanne 4, nämlich in radialer Richtung R unterhalb des Getriebegehäuses 3, angeordnet. Zudem sind die Leistungselektronik 2 und die Ölwanne 4 derart ausgebildet und angeordnet, dass die Leistungselektronik 2 bündig zu der Ölwanne 4, insbesondere der Ölwannenwand 5, ist. Dies bedeutet, dass die Leistungselektronik 2 und die Ölwannenwand 5 in tangentialer Richtung T nicht versetzt zueinander angeordnet sind. Die Leistungselektronik 2 ist mit dem Getriebegehäuse 3 und/oder der Ölwanne 4 verbunden und stützt sich somit am Getriebegehäuse 3 und/oder der Ölwanne 4 ab.

Figur 2 zeigt eine Querschnittansicht des Getriebes 15 entlang der anderen Ebene E2. Das Getriebegehäuse 3 umschließt einen Hohlraum 8, in dem eine in den Figuren nicht gezeigte Getriebeeinheit angeordnet ist. Ein Leistungselektronikboden 9 ist in radialer Richtung R weiter weg angeordnet als ein Boden 10 des hydraulischen Getriebesteuergeräts 1. Darüber hinaus ist aus Figur 2 ersichtlich, dass die Leistungselektronik 2 in tangentialer Richtung T versetzt zu dem hydraulischen Getriebesteuergerät 1 angeordnet ist. Es existiert somit kein Abschnitt der Leistungselektronik 2, der in radialer Richtung R oberhalb oder unterhalb des hydraulischen Getriebesteuergeräts angeordnet ist. Die Ebene E1 ist in radialer Richtung R beabstandet von der Getriebemittelachse M angeordnet.

Figur 3 zeigt eine Unteransicht des in den Figuren 1 und 2 gezeigten Getriebes 15, jedoch mit einer Ölwannenplatte 6. Die Ölwannenplatte 6 schließt den Hohlraum 7 der Ölwanne 4 in radialer Richtung R ab, so dass ein in dem Hohlraum 7 befindliches Öl aus dem Hohlraum 7 nicht ausströmen kann. Dabei kann die Ölwannenplatte 6 mit der Ölwannenwand 5 mittels einer Schraubverbindung lösbar verbunden werden. Die Ölwanne 4 ist im Wesentlichen L-förmig ausgebildet.

Figur 4 zeigt die Querschnittansicht des in Figur 3 dargestellten Getriebes 15 entlang der anderen Ebene E2. Die Leistungselektronik 2 und die Ölwanne 4 sind derart angeordnet und/oder ausgebildet, dass der Leistungselektronikboden 9 und die Ölwannenplatte 6 in einer weiteren Ebene E3 angeordnet sind. Die weitere Ebene E3 verläuft parallel zur Ebene E1.

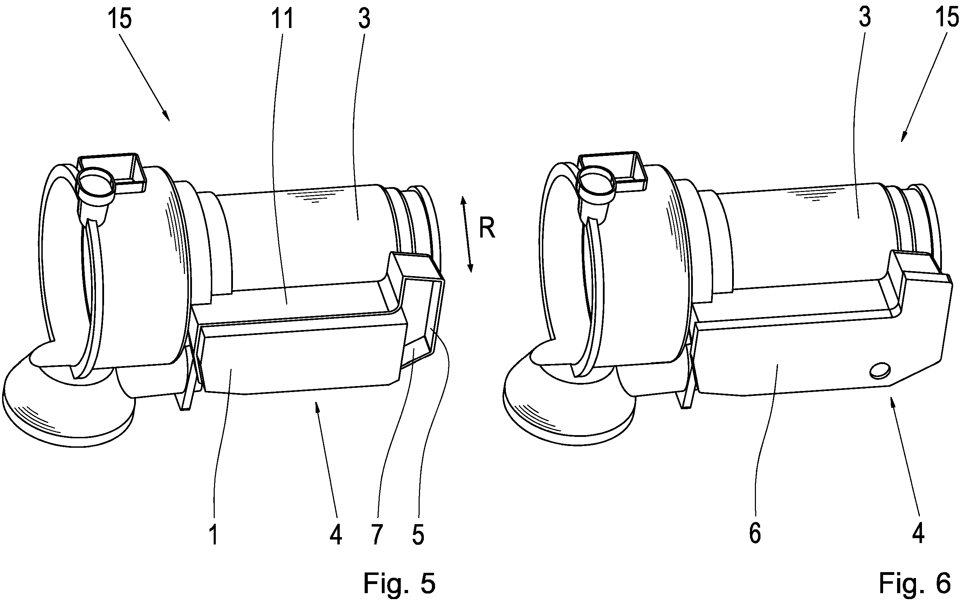

Figur 5 zeigt eine perspektivische Darstellung des Getriebes 15 gemäß dem ersten Ausführungsbeispiel ohne Ölwannenplatte und Figur 6 zeigt eine perspektivische Darstellung des Getriebes 15 gemäß dem ersten Ausführungsbeispiel mit Ölwannenplatte 6. Die Ölwanne 4 erstreckt sich von dem Getriebegehäuse 3 in radialer Richtung R und ist mit dem Getriebegehäuse 3 einstückig verbunden. In den Figuren 5 und 6 ist eine Ausbuchtung 11 ersichtlich, in der die Leistungselektronik 2 angeordnet werden kann.

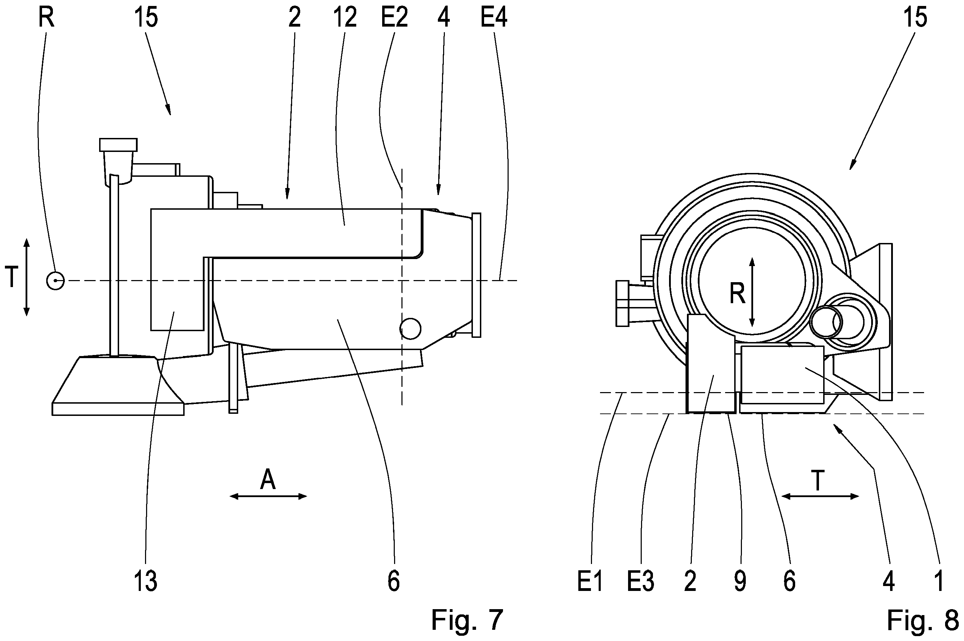

Figur 7 zeigt eine Unteransicht des erfindungsgemäßen Getriebes 15 gemäß einem zweiten Ausführungsbeispiel. Das Getriebe 15 unterscheidet sich von den in Figuren 1-6 dargestellten Getrieben in der Ausführung der Leistungselektronik 2. So weist die Leistungselektronik 2 eine L-Form auf.

In dem zweiten Ausführungsbeispiel sind die Leistungselektronik 2 und das hydraulische Getriebesteuergerät 1 tangential und axial nebeneinander angeordnet. Dabei sind, wie aus Figur 8 ersichtlich ist, die Leistungselektronik 2 und das hydraulische Getriebesteuergerät 1 in der Ebene E1 angeordnet. Zudem sind das hydraulische Getriebesteuergerät 1 und die Leistungselektronik 2 analog zu dem ersten Ausführungsbeispiel in der anderen Ebene E2 angeordnet.

Aufgrund der Nebeneinanderanordnung der Leistungselektronik 2 und des hydraulischen Getriebesteuergeräts 1 in axialer Richtung A sind das hydraulische Getriebesteuergerät 1 und die Leistungselektronik 2 in einer zusätzliche Ebene E4 angeordnet, die sich in axialer Richtung A und in radialer Richtung R erstreckt und senkrecht zu der Ebene E1 und der anderen Ebene E2 steht. Dabei sind die Leistungselektronik 2 und das hydraulische Getriebesteuergerät 1 sowohl in axialer als auch tangentialer Richtung mittelbar nebeneinander angeordnet, da zwischen der Leistungselektronik 2 und dem hydraulischen Getriebesteuergerät 1 die Ölwannenwand 5 angeordnet ist. Das hydraulische Getriebesteuergerät 1 ist in Figur 7 zwar nicht dargestellt, ist jedoch analog dem in Figur 1 dargestellten hydraulischen Getriebesteuergerät 1 ausgeführt und angeordnet.

Die Leistungselektronik 2 weist einen Steg 12 auf, der sich in axialer Richtung A erstreckt und in der in Figur 5 gezeigten Ausbuchtung 11 angeordnet ist. Daneben weist die Leistungselektronik 2 einen Fuß 13 auf, der sich in tangentialer Richtung T erstreckt und mit dem Steg 12 verbunden ist. Der Fuß 13 umschließt einen Teil der Ölwanne 4.

Figur 8 zeigt eine Querschnittansicht des in Figur 7 gezeigten Getriebes 15 entlang der anderen Ebene E2. Auch bei dem zweiten Ausführungsbeispiel ist analog zum ersten Ausführungsbeispiel die Leistungselektronik 2 derart ausgebildet und angeordnet, dass der Leistungselektronikboden 9 und die Ölwannenplatte 6 in der weiteren Ebene E3 angeordnet sind. Darüber hinaus ist aus Figur 8 ersichtlich, dass die Leistungselektronik 2 in tangentialer Richtung T versetzt zu dem hydraulischen Getriebesteuergerät 1 angeordnet ist. Es existiert somit kein Abschnitt der Leistungselektronik 2, der in radialer Richtung R oberhalb oder unterhalb des hydraulischen Getriebesteuergeräts 1 angeordnet ist.

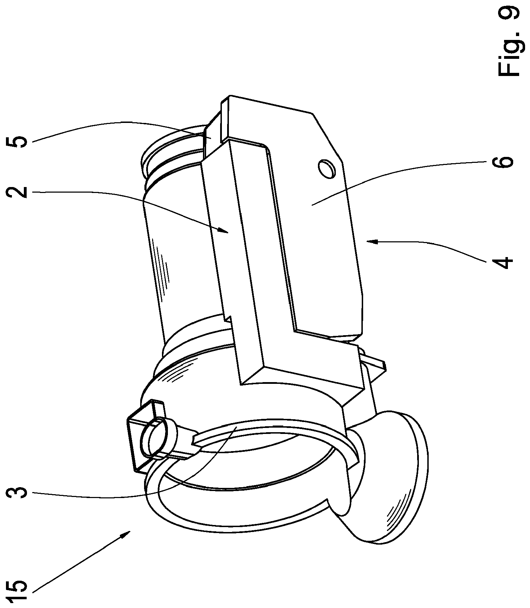

Figur 9 zeigt eine perspektivische Darstellung des in den Figuren 7 und 8 dargestellten Getriebes. Wie aus Figur 9 ersichtlich ist, liegt die Leistungselektronik 2 unmittelbar an der Ölwanne 4, insbesondere der Ölwannenwand 5, und dem Getriebegehäuse 3 an.

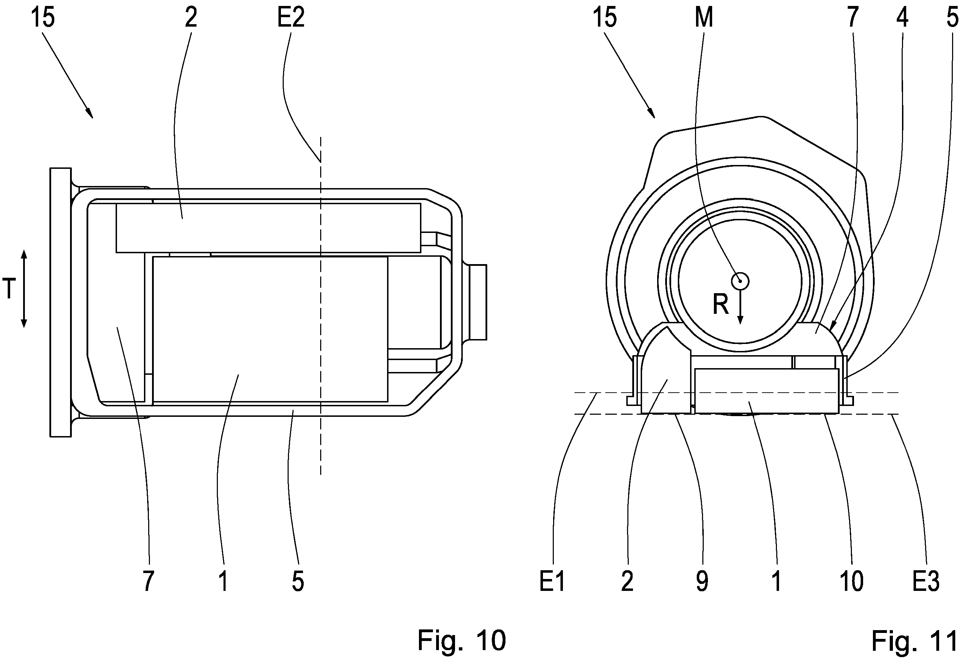

Figur 10 zeigt eine Unteransicht eines erfindungsgemäßen Getriebes 15 gemäß einem dritten Ausführungsbeispiel ohne Ölwannenplatte. Das dritte Ausführungsbeispiel unterscheidet sich von dem ersten und zweiten Ausführungsbeispiel dadurch, dass die Leistungselektronik 2 in dem Hohlraum 7 der Ölwanne 4 angeordnet sind. In diesem Ausführungsbeispiel liegen die Leistungselektronik 2 und das hydraulische Getriebesteuergerät 1 in tangentialer Richtung T nebeneinander.

Figur 11 zeigt eine Querschnittsansicht des in Figur 10 gezeigten Getriebes 15 entlang der anderen Ebene E2. Der Boden des hydraulischen Getriebesteuergeräts 1 und der Leistungselektronikboden 9 sind in radialer Richtung R von der Getriebemittelachse M gleich weit weg angeordnet. Daher sind der Leistungselektronikboden 9 und der Boden 10 des hydraulischen Getriebesteuergeräts in der weiteren Ebene E3 angeordnet. Daneben sind die Leistungselektronik 2 und das hydraulische Getriebesteuergerät 1 in der zur weiteren Ebene E3 parallelen Ebene E1 angeordnet. Außerdem sind die Leistungselektronik 2 und das hydraulische Getriebesteuergerät 1 in tangentialer Richtung T versetzt angeordnet.

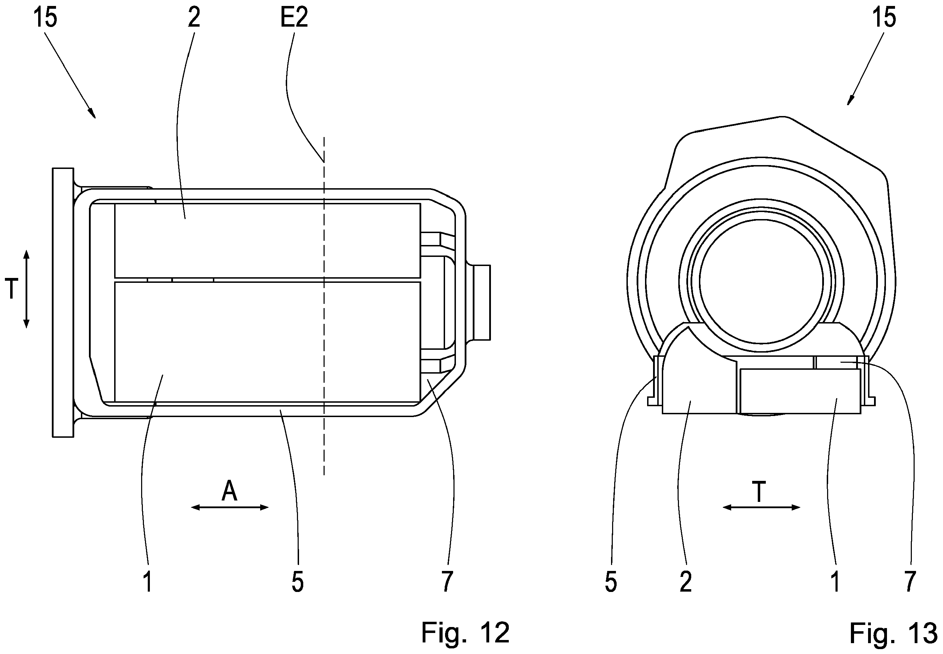

Figur 12 zeigt eine Unteransicht eines Getriebes 15 gemäß einem vierten Ausführungsbeispiel und Figur 13 zeigt eine Querschnittsansicht des Getriebes 15 gemäß dem vierten Ausführungsbeispiel entlang der anderen Ebene E2. Das Getriebe 15 gemäß dem vierten Ausführungsbeispiel unterscheidet sich von dem in den Figuren 10 und 11 dargestellten Getriebe 15 gemäß dem dritten Ausführungsbeispiel in der Form und Ausbildung der Leistungselektronik 2 und des hydraulischen Getriebesteuergeräts 1.

So weist die Leistungselektronik 2 des Getriebes 15 gemäß dem vierten Ausführungsbeispiel ein größeres Volumen als die Leistungselektronik 2 des Getriebes 15 gemäß dem dritten Ausführungsbeispiel auf. Das hydraulische Getriebesteuergerät 1 gemäß dem vierten Ausführungsbeispiel erstreckt sich in axialer Richtung A weiter als das hydraulische Getriebesteuergerät 1 gemäß dem dritten Ausführungsbeispiel und ist in tangentialer Richtung T schmaler ausgebildet als das hydraulische Getriebesteuergerät 1 gemäß dem dritten Ausführungsbeispiel.

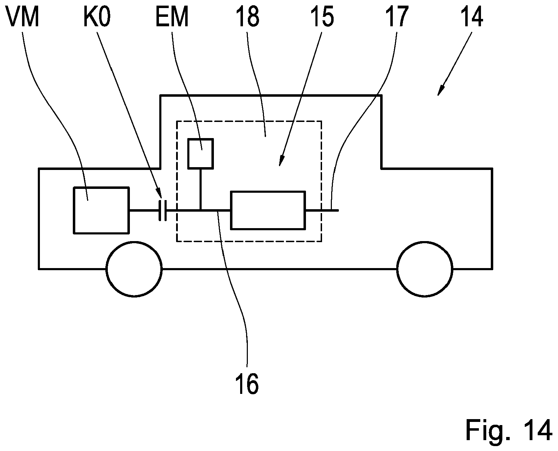

Figur 14 zeigt ein Kraftfahrzeug 14 mit einer Kraftfahrzeug-Antriebseinheit VM, die beispielsweise ein Verbrennungsmotor ist, und einem Hybridantrieb 18. Der Hybridantrieb 18 weist das Getriebe 15 und eine elektrische Maschine EM auf. Die elektrische Maschine EM ist mit einer Getriebewelle 16 wirkverbunden. Bei der Getriebewelle 16 handelt es sich um eine Getriebeeingangswelle. Das Getriebe 15 weist außerdem eine Getriebeausganswelle 17 auf, die mit weiteren in der Figur 14 nicht dargestellten Bauteilen des Kraftfahrzeugs 14, wie beispielsweise einem Achsdifferential, wirkverbunden ist. Die Getriebewelle 16 ist mittels einer Kupplung K0 mit der Kraftfahrzeug-Antriebseinheit VM wirkverbindbar.

### Bezugszeichen

- 1: hydraulisches Getriebesteuergerät
- 2: Leistungselektronik
- 3: Getriebegehäuse
- 4: Ölwanne
- 5: Ölwannenwand
- 6: Ölwannenplatte
- 7: Hohlraum der Ölwanne
- 8: Hohlraum des Getriebegehäuses
- 9: Leistungselektronikboden
- 10: Boden des hydraulischen Getriebesteuergeräts
- 11: Ausbuchtung
- 12: Steg
- 13: Fuß
- 14: Kraftfahrzeug
- 15: Getriebe
- 16: Getriebewelle
- 17: Getriebeausgangswelle
- 18: Hybridantrieb

- A: axiale Richtung
- E1: Ebene
- E2: andere Ebene
- E3: weitere Ebene
- E4: zusätzliche Ebene
- K0: Kupplung
- M: Getriebemittelachse
- R: radiale Richtung
- T: tangentiale Richtung

- EM: elektrische Maschine
- VM: Kraftfahrzeug-Antriebseinheit

## Patentansprüche

1. Getriebe (15) für ein Kraftfahrzeug (14), mit einem Getriebegehäuse (3), einer an das Getriebegehäuse (3) angebrachten Ölwanne (4) und einer Leistungselektronik (2), die als Umrichter für eine elektrische Maschine (EM) dient und die an dem Getriebegehäuse (3) und/oder der Ölwanne (4) abgestützt ist, **dadurch gekennzeichnet, dass** das Getriebe ein hydraulisches Getriebesteuergerät (1) aufweist, wobei das hydraulische Getriebesteuergerät (1) und die Leistungselektronik (2) bezogen auf eine Getriebemittelachse (M) tangential und/oder axial zumindest abschnittsweise nebeneinander angeordnet sind.

2. Getriebe (15) nach Anspruch 1, **dadurch gekennzeichnet, dass**
a. das hydraulische Getriebesteuergerät (1) und die Leistungselektronik (2) in einer Ebene (E1) angeordnet sind, die sich in tangentialer Richtung (T) und in axialer Richtung (A) erstreckt und/oder dass
b. die Leistungselektronik (2) versetzt zu dem hydraulischen Getriebesteuergerät (1) angeordnet ist.

3. Getriebe (15) nach Anspruch 1 oder 2, **dadurch gekennzeichnet, dass** das hydraulische Getriebesteuergerät (1) in einem Hohlraum (7) der Ölwanne (4) angeordnet ist.

4. Getriebe (15) nach einem der Ansprüche 1 bis 3, **dadurch gekennzeichnet, dass** die Leistungselektronik (2) außerhalb des Hohlraums (7) der Ölwanne (4) und/oder außerhalb eines Hohlraums (8) des Getriebegehäuses (3) angeordnet ist.

5. Getriebe (15) nach einem der Ansprüche 1 bis 4, **dadurch gekennzeichnet, dass** ein Leistungselektronikboden (9) und eine Ölwannenplatte (6) in einer weiteren Ebene (E3) angeordnet sind.

6. Getriebe (15) nach einem der Ansprüche 1 bis 3, **dadurch gekennzeichnet, dass** die Leistungselektronik (2) in dem Hohlraum (7) der Ölwanne (4) angeordnet ist.

7. Getriebe (15) nach Anspruch 6, **dadurch gekennzeichnet, dass** der Leistungselektronikboden (9) und ein Boden des hydraulischen Getriebesteuergeräts (1) in einer weiteren Ebene (E3) angeordnet sind.

8. Getriebe (15) nach einem der Ansprüche 1 bis 7, **dadurch gekennzeichnet, dass** die Leistungselektronik (2) an dem Getriebegehäuse (3) und/oder an einer Ölwannenwand (5) der Ölwanne (4) anliegt.

9. Getriebe (15) nach einem der Ansprüche 1 bis 8, **dadurch gekennzeichnet, dass** die Leistungselektronik (2) eine L-Form und/oder das hydraulische Getriebesteuergerät (1) eine L-Form aufweist.

10. Getriebe (15) nach Anspruch 9, **dadurch gekennzeichnet, dass** sich ein Steg (12) der Leistungselektronik (2) in axialer Richtung (A) und ein Fuß (13) der Leistungselektronik (3) in tangentialer Richtung (T) erstreckt.

11. Getriebe (15) nach Anspruch 9 oder 10, **dadurch gekennzeichnet, dass** sich ein Steg (12) des hydraulischen Getriebesteuergeräts (1) in axialer Richtung (A) und ein Fuß (13) des hydraulischen Getriebesteuergeräts (1) in tangentialer Richtung (T) erstreckt.

12. Getriebe (15) nach einem der Ansprüche 1 bis 11, **dadurch gekennzeichnet, dass** die Leistungselektronik (2) bündig zu der Ölwanne (4) angeordnet ist.

13. Hybridantrieb (18) mit einem Getriebe (15) nach einem der Ansprüche 1 bis 12 und der elektrischen Maschine (EM), wobei die elektrische Maschine (EM) mit der Leistungselektronik (2) elektrisch leitend verbunden ist.

14. Hybridantrieb (18) nach Anspruch 13, **dadurch gekennzeichnet, dass**
a. die elektrische Maschine (EM) mit einer Getriebewelle (16) wirkverbunden ist und/oder dass
b. abhängig von einem Betriebszustand des Getriebes (15) eine Getriebeausgangswelle (17) von der elektrischen Maschine (EM) antreibbar ist.

15. Kraftfahrzeug mit einer Kraftfahrzeug-Antriebseinheit (VM) und einem Getriebe (15) nach einem der Ansprüche 1 bis 12 oder einem Hybridantrieb (18) nach Anspruch 13 oder 14, wobei die Kraftfahrzeug-Antriebseinheit (VM) mit dem Getriebe (15) oder dem Hybridantrieb (18) wirkverbunden ist.

## Claims

1. Transmission (15) for a motor vehicle (14), comprising a transmission housing (3), an oil sump (4) which is attached to the transmission housing (3), and a power electronics system (2) which serves as a converter for an electrical machine (EM) and which is supported on the transmission housing (3) and/or the oil sump (4), **characterized in that** the transmission has a hydraulic transmission controller (1), wherein the hydraulic transmission controller (1) and the power electronics system (2) are arranged tangentially and/or axially next to one another at least in sections with respect to a transmission centre axis (M).

2. Transmission (15) according to Claim 1, **characterized in that**
a. the hydraulic transmission controller (1) and the power electronics system (2) are arranged in one plane (E1) which extends in the tangential direction (T) and in the axial direction (A), and/or **in that**
b. the power electronics system (2) is arranged offset in relation to the hydraulic transmission controller (1) .

3. Transmission (15) according to Claim 1 or 2, **characterized in that** the hydraulic transmission controller (1) is arranged in a cavity (7) of the oil sump (4).

4. Transmission (15) according to one of Claims 1 to 3, **characterized in that** the power electronics system (2) is arranged outside the cavity (7) of the oil sump (4) and/or outside a cavity (8) of the transmission housing (3) .

5. Transmission (15) according to one of Claims 1 to 4, **characterized in that** a power electronics system base (9) and an oil sump plate (6) are arranged in a further plane (E3).

6. Transmission (15) according to one of Claims 1 to 3, **characterized in that** the power electronics system (2) is arranged in the cavity (7) of the oil sump (4).

7. Transmission (15) according to Claim 6, **characterized in that** the power electronics system base (9) and a base of the hydraulic transmission controller (1) are arranged in a further plane (E3).

8. Transmission (15) according to one of Claims 1 to 7, **characterized in that** the power electronics system (2) rests against the transmission housing (3) and/or against an oil sump wall (5) of the oil sump (4).

9. Transmission (15) according to one of Claims 1 to 8, **characterized in that** the power electronics system (2) has an L shape and/or the hydraulic transmission controller (1) has an L shape.

10. Transmission (15) according to Claim 9, **characterized in that** a web (12) of the power electronics system (2) extends in the axial direction (A) and a foot (13) of the power electronics system (3) extends in the tangential direction (T).

11. Transmission (15) according to Claim 9 or 10, **characterized in that** a web (12) of the hydraulic transmission controller (1) extends in the axial direction (A) and a foot (13) of the hydraulic transmission controller (1) extends in the tangential direction (T).

12. Transmission (15) according to one of Claims 1 to 11, **characterized in that** the power electronics system (2) is arranged flush with the oil sump (4).

13. Hybrid drive (18) comprising a transmission (15) according to one of Claims 1 to 12 and the electrical machine (EM), wherein the electrical machine (EM) is electrically conductively connected to the power electronics system (2).

14. Hybrid drive (18) according to Claim 13, **characterized in that**
a. the electrical machine (EM) is operatively connected to a transmission shaft (16), and/or **in that**
b. a transmission output shaft (17) can be driven by the electrical machine (EM) depending on an operating state of the transmission (15).

15. Motor vehicle comprising a motor vehicle drive unit (VM) and a transmission (15) according to one of Claims 1 to 12 or a hybrid drive (18) according to Claim 13 or 14, wherein the motor vehicle drive unit (VM) is operatively connected to the transmission (15) or the hybrid drive (18).

## Revendications

1. Transmission (15) destinée à un véhicule automobile (14), la transmission comprenant un carter de transmission (3), un carter d'huile (4) fixé au carter de transmission (3) et une électronique de puissance (2) qui sert de convertisseur à une machine électrique (EM) et qui prend appui sur le carter de transmission (3) et/ou le carter d'huile (4), **caractérisée en ce que** la transmission comporte un dispositif de commande de transmission hydraulique (1), le dispositif de commande de transmission hydraulique (1) et l'électronique de puissance (2) sont disposées tangentiellement et/ou axialement l'une à côté de l'autre au moins par portions par rapport à un axe central de transmission (M).

2. Transmission (15) selon la revendication 1, **caractérisée en ce que**
a. le dispositif de commande de transmission hydraulique (1) et l'électronique de puissance (2) sont disposés dans un plan (E1) qui s'étend dans la direction tangentielle (T) et dans la direction axiale (A) et/ou **en ce que**
b. l'électronique de puissance (2) est disposée en étant décalée du dispositif de commande de transmission hydraulique (1).

3. Transmission (15) selon la revendication 1 ou 2, **caractérisée en ce que** le dispositif de commande de transmission hydraulique (1) est disposé dans une cavité (7) du carter d'huile (4).

4. Transmission (15) selon l'une des revendications 1 à 3, **caractérisée en ce que** l'électronique de puissance (2) est disposée à l'extérieur de la cavité (7) du carter d'huile (4) et/ou à l'extérieur d'une cavité (8) du carter de transmission (3).

5. Transmission (15) selon l'une des revendications 1 à 4, **caractérisée en ce qu'**un fond d'électronique de puissance (9) et une plaque de carter d'huile (6) sont disposés dans un autre plan (E3).

6. Transmission (15) selon l'une des revendications 1 à 3, **caractérisée en ce que** l'électronique de puissance (2) est disposée dans la cavité (7) du carter d'huile (4) .

7. Transmission (15) selon la revendication 6, **caractérisée en ce que** le fond d'électronique de puissance (9) et le fond du dispositif de commande de transmission hydraulique (1) sont disposés dans un autre plan (E3).

8. Transmission (15) selon l'une des revendications 1 à 7, **caractérisée en ce que** l'électronique de puissance (2) est en appui sur le carter de transmission (3) et/ou sur une paroi (5) du carter d'huile (4).

9. Transmission (15) selon l'une des revendications 1 à 8, **caractérisée en ce que** l'électronique de puissance (2) a une forme de L et/ou le dispositif de commande de transmission hydraulique (1) a une forme de L.

10. Transmission (15) selon la revendication 9, **caractérisée en ce qu'**une nervure (12) de l'électronique de puissance (2) s'étend dans la direction axiale (A) et un pied (13) de l'électronique de puissance (3) dans la direction tangentielle (T).

11. Transmission (15) selon la revendication 9 ou 10, **caractérisée en ce qu'**une nervure (12) du dispositif de commande de transmission hydraulique (1) s'étend dans la direction axiale (A) et un pied (13) du dispositif de commande de transmission hydraulique (1) s'étend dans la direction tangentielle (T).

12. Transmission (15) selon l'une des revendications 1 à 11, **caractérisée en ce que** l'électronique de puissance (2) est disposée à fleur du carter d'huile (4) .

13. Entraînement hybride (18) comprenant une transmission (15) selon l'une des revendications 1 à 12 et la machine électrique (EM), la machine électrique (EM) étant reliée électriquement à l'électronique de puissance (2).

14. Entraînement hybride (18) selon la revendication 13, **caractérisé en ce que**
a. la machine électrique (EM) est reliée fonctionnellement à un arbre de transmission (16) et/ou **en ce que**
b. un arbre de sortie de transmission (17) peut être entraîné par la machine électrique (EM) en fonction d'un état de fonctionnement de la transmission (15).

15. Véhicule automobile comprenant une unité d'entraînement de véhicule automobile (VM) et une transmission (15) selon l'une des revendications 1 à 12 ou un entraînement hybride (18) selon la revendication 13 ou 14, l'unité d'entraînement de véhicule automobile (VM) étant reliée fonctionnellement à la transmission (15) ou à l'entraînement hybride (18).
